# EUROPÄISCHE PATENTSCHRIFT

(11) **EP 4 134 575 B1**
(45) Veröffentlichungstag und Bekanntmachung des Hinweises auf die Patenterteilung: **22.10.2025**
(21) Anmeldenummer: 22185432.6
(22) Anmeldetag: 18.07.2022
(51) Int. Cl.: F16K 31/122, F16K 1/12, F16K 7/12

(54) **VENTILANTRIEB, VENTILANORDNUNG UND VERFAHREN**
VALVE ACTUATOR, VALVE ARRANGEMENT AND METHOD
ENTRAÎNEMENT DE SOUPAPE, AGENCEMENT DE SOUPAPE ET PROCÉDÉ

(30) Priorität: 11.08.2021 DE 102021120895
(43) Veröffentlichungstag der Anmeldung: 15.02.2023
(60) Teilanmeldung: 24156655.3
(73) Patentinhaber: GEMÜ Gebr. Müller Apparatebau GmbH & Co. Kommanditgesellschaft, 74653 Ingelfingen (DE)
(72) Erfinder: Matter, Simon, 74747 Ravenstein (DE); Bitter, Philipp, 73342 Gosbach (DE); Knoche, Sebastian, 74613 Öhringen (DE); Falkenberger, Christian, 97980 Bad Mergentheim (DE); Falkenberger, Jochen, 97980 Bad Mergentheim (DE)
(74) Vertreter: DREISS Patentanwälte PartG mbB

(56) Entgegenhaltungen:
- EP-A1- 2 792 918
- DE-A1- 102018 213 712
- DE-U1- 202014 102 658
- JP-A- 2021 046 866
- KR-B1- 101 424 423
- KR-B1- 101 969 188

## Beschreibung

Die Erfindung betrifft Fortschritte im Bereich der Ventiltechnik.

Aus der EP 2 792 918 A1 ist ein Stellantrieb für ein Stellventil mit einer zwischen Antriebsgehäusehälften eingeklemmte Membran bekannt. Aus der DE 10 2018 213 712 A1 ist eine Ventilanordnung bekannt. Aus der KR 101 424 423 B1 ist ein hydraulischer Drehantrieb für ein Ventil bekannt. Aus der JP 2021 046866 A ist Durchflussregler bekannt. Aus der DE 20 2014 102 658 U1 ist ein Membranventil bekannt. Aus der KR 101 969 188 B1 ist ein Ventil mit einem in einer Führungsbahn zwangsgeführten Stift bekannt.

Die Probleme des Standes der Technik werden durch einen Ventilantrieb gemäß dem Anspruch 1, eine Ventilanordnung gemäß einem nebengeordneten Anspruch und durch ein Verfahren gemäß einem nebengeordneten Anspruch gelöst.

Ein erster Aspekt der Beschreibung betrifft einen Ventilantrieb umfassend ein Antriebsgehäuse und ein innerhalb des Antriebsgehäuses beweglich gelagertes Antriebselement, insbesondere einen Pneumatik-Kolben, wobei in einem Montagezustand des Ventilantriebs wenigstens eine erste Kontur des Antriebselements in wenigstens eine zweite zum Antriebsgehäuse feststehende Kontur derart eingreift, dass durch eine Axialverzahnung eine Rotation des Antriebselements um eine Stellachse in zumindest eine Drehrichtung blockiert ist.

Der Ventilantrieb zeichnet sich dadurch aus, dass das Antriebselement in einem von dem Montagezustand unterschiedlichen Betriebszustand translatorisch entlang der Stellachse und rotatorisch um die Stellachse bewegbar ist.

Dementsprechend wird ein Ventilantrieb bereitgestellt, der eine Montage bzw. Demontage eines anzutreibenden Elements, beispielsweise einer Ventilstange für Ventile, in dem Montagezustand an das Antriebselement, ermöglicht, ohne dass ein Gegenhalten gegen ein in das Antriebselement eingebrachtes Montage- bzw. Demontagemoment notwendig ist. Zudem ist die Ventilstange schnell und einfach mit dem Antriebselement verbunden ohne den Bedarf an zusätzlichem Werkzeug.

Folglich wird die Beschränkung des rotatorischen Freiheitsgrads im Betriebszustand aufgehoben. Davon profitieren beispielsweise Antriebe, die mit einer Druckfeder in einer normal-geöffneten oder normalgeschlossenen Position gehalten werden.

Ein vorteilhaftes Beispiel zeichnet sich dadurch aus, dass eine sich an dem Antriebsgehäuse abstützende Druckfeder das Antriebselement in Richtung der zum Antriebsgehäuse feststehenden Kontur drückt.

Folglich befindet sich der Ventilantrieb in dem Montagezustand ohne separat angetrieben bzw. angesteuert zu werden und das Antriebselement kann in diesem Montagezustand mit der Ventilstange verbunden werden.

Ein vorteilhaftes Beispiel zeichnet sich dadurch aus, dass in dem Montagezustand eine Ventilstange und das Antriebselement über ineinandergreifende Gewinde miteinander verbindbar sind.

Folglich wird eine einheitliche Schnittstelle bereitgestellt, die es ermöglicht, eine Vielzahl unterschiedlicher Ventilkörper und Ventiltypen mit demselben Antriebstyp zu betreiben.

Ein vorteilhaftes Beispiel zeichnet sich dadurch aus, dass ein Zwischenkörper mit einer an dem Ventilgehäuse angeordneten Schnittstelle über ineinandergreifende Gewinde miteinander verbindbar sind.

Folglich wird eine einheitliche Schnittstelle bereitgestellt, die es ermöglicht, eine Vielzahl unterschiedlicher Ventilkörper mit dem Ventilantrieb über ventilkörperseitig angepasste Zwischenkörper zu koppeln. Durch die einheitlich ausgebildeten Schnittstellen des Antriebsgehäuses und des Antriebselements ist diese Art des Ventilantriebs für eine Vielzahl an Ventilen unterschiedlicher Größe, Typs oder Funktionsweise als Antriebeinheit geeignet. Somit sind Ventileinrichtungen modular konfigurierbar, die eine hohe Anzahl an Gleichteilen, in Form des Ventilantriebs, aufweisen. Dementsprechend entstehen Kosten- und Produktionsvorteile, da der Ventilantrieb in höheren Stückzahlen produziert werden kann.

Ein vorteilhaftes Beispiel zeichnet sich dadurch aus, dass die wenigstens eine zweite zum Antriebsgehäuse feststehende Kontur an einem insbesondere lotrecht zur Stellachse verlaufenden zweiten Abschnitt innerhalb des Antriebsgehäuses angeordnet ist, und wobei die wenigstens eine erste Kontur an einem insbesondere lotrecht zur Stellachse verlaufenden ersten Abschnitt des Antriebselements, welcher dem zweiten Abschnitt des Antriebsgehäuses zugewandt ist, angeordnet ist.

Vorteilhaft können die Konturen so durch eine axiale Bewegung aus einer Betriebsposition heraus aufeinander zubewegt werden und durch eine Verdrehung des Antriebselements in der Montageposition ineinandergreifen.

Ein vorteilhaftes Beispiel zeichnet sich dadurch aus, dass der erste Abschnitt des Antriebselements oder der zweite Abschnitt des Antriebsgehäuses lotrecht zur Stellachse verlaufende Oberflächen umfasst, welche zwischen zwei benachbarten der ersten Konturen oder zwei benachbarten der zweiten Konturen verlaufen, und wobei die zweite Kontur oder die erste Kontur eine jeweilige distale Oberfläche umfasst, die lotrecht zur Stellachse verläuft.

Vor Erreichen der Montageposition sorgen die zwischen den jeweiligen Konturen angeordneten Oberflächen dafür, dass die auftreffenden Konturen des gegenüberliegenden Abschnitts eine Rotation des Antriebselements erlauben bis dieses in der Montageposition einrastet.

Ein vorteilhaftes Beispiel zeichnet sich dadurch aus, dass eine der Konturen, die erste Kontur des Antriebelements oder die zweite zum Antriebgehäuse feststehende Kontur, als Rastvertiefung ausgebildet ist und die andere der Konturen als erhabene Rastnase ausgebildet ist. So kann in einem nicht gezeigten Beispiel kann anstatt einer Axialverzahnung die Verzahnung auch radial angeordnet sein, also in axialer Richtung ineinandergreifen.

Dementsprechend ermöglicht der Ventilantrieb den Montagezustand durch einen formschlüssigen Eingriff platzsparender belastbarer Konturen in Form einer Axialverzahnung, die einer hohe Scherbelastung standhalten.

Zudem wird ein haptisches merkbares Feedback an einen Benutzer gegeben, das auf den Eingriff der Konturen zurückzuführen ist.

Ein vorteilhaftes Beispiel zeichnet sich dadurch aus, dass in dem Montagezustand wenigstens eine, besser mehrere Konturen im Eingriff stehen, welche symmetrisch angeordnet sind, vorteilhaft sind 3 Konturen.

Demnach wird das Montage- beziehungsweise Demontagemoment, aufgrund der Anordnung beziehungsweise der symmetrischen Verteilung an den Eingriffspunkten, besser eingeleitet und gleichmäßig verteilt.

Ein zweiter Aspekt der Beschreibung betrifft eine Ventilanordnung umfassend den Ventilantrieb gemäß dem ersten Aspekt, wobei der Ventilantrieb mit einem Ventil verbunden ist.

Ein dritter Aspekt der Beschreibung betrifft ein Verfahren zur Montage des Ventilantriebs gemäß dem ersten Aspekt an einem Ventil umfassend: Anordnen einer Ventilstange des Ventils an das Antriebselement des Ventilantriebs in dem Montagezustand; Anbringen eines Zwischenkörpers des Ventils an das Antriebgehäuse des Ventilantriebs; und Anordnen eines Ventilkörpers des Ventils an den Zwischenkörper.

In der Zeichnung zeigen:
- Figur 1: ein Ventilantrieb für ein Sitzventil;
- Figur 2: der Ventilantrieb für ein Membranventil;
- Figur 3: der Ventilantrieb;
- Figur 4: ein Antriebselement des Ventilantriebs;
- Figur 5: ein ventilkörperseitiges Abschlusselement des Ventilantriebs;
- Figur 6: ein schematisches Ablaufdiagramm;
- Figuren 7 und 8: ein Beispiel für den Ventilantrieb für eine normal-geschlossene Ventilanordnung;
- Figuren 9 und 10: ein Beispiel für den Ventilantrieb für eine normal-geöffnete Ventilanordnung;
- Figuren 11 und 12: ein Beispiel für eine Schnittstelle zwischen einem Antriebskörper und einem Zwischenkörper;
- Figur 13: ein Beispiel für eine Hubbegrenzung.

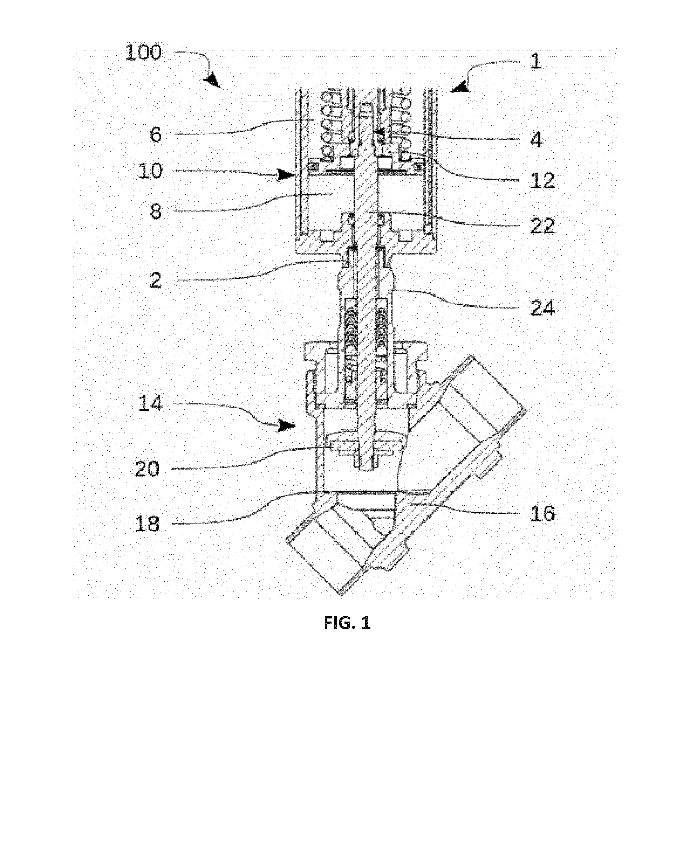

Die Figur 1 zeigt eine Ventilanordnung 100 in einer Schnittdarstellung. Die Ventilanordnung 100 umfasst einen Ventilantrieb 1, der eine Schnittstelle 2, eine Aufnahmeeinrichtung 4, die Kammern 6 und 8, ein Antriebsgehäusegehäuse 10 und ein Antriebselement 12, insbesondere einen Pneumatik-Kolben, umfasst. Die Aufnahmeeinrichtung 4 ist an dem Antriebselement 12 angeordnet. Der Ventilantrieb 1 ist als fluidbasierter Antrieb ausgebildet, der durch ein Befüllen und Entleeren der Kammern 6 und 8 angetrieben wird. Durch entsprechendes Gestalten des Antriebselements 12 wird erreicht, dass die federabgewandte Kammer 8 ein verringertes Steuerluftvolumen aufweist, was den Vorteil von einem geringen Druckluftverbrauch hat und damit die Effizienz steigert. Der federabgewandte äußere Bereich des Antriebselements 12 ist von einer Feder wegweisend abgesetzt zu dem inneren Verbindungsbereich angeordnet, um das Steuerluftvolumen zu reduzieren und um die Rastposition einfacher zu erreichen.

In anderen Worten ist der Kolben 12 gestuft ausgeführt und umfasst eine Lagerstelle im Bereich eines Abschlusselements, das nachgehend mit dem Bezugszeichen 304 gekennzeichnet ist. Durch das Antreiben des Ventilantriebs 1 wird das Antriebselement 12 innerhalb des Antriebgehäuses 10 bewegt. Weitere Antriebskonzepte wie beispielsweise elektromagnetische Antriebstechniken sind selbstverständlich auch denkbar.

In einem nicht gezeigten Beispiel ist das Antriebselement 12 im Bereich des Abschlusselements an einer Lotebene einer Stellachse 310 gespiegelt. Die Stufung des Antriebselements 12 verjüngt sich hierbei in Richtung des Ventilkörpers. Bei diesem normal-geöffneten Antrieb stützt sich die Feder an einem dem Ventilkörper zugewandten Abschnitt der Kammer 8 ab und drückt das Antriebselement 12 vom Ventilkörper weg. Des Weiteren umfasst die Ventilanordnung 100 ein Sitzventil 14, welches ein Ventilgehäuse 16, einen Ventilsitz 18 und ein Schließelement 20 umfasst. Ein an der Aufnahmeeinrichtung 4 angeordnete Ventilstange 22 stellt eine starre Verbindung zwischen dem Ventilantrieb 1 und dem Schließelement 20 des Sitzventils 14 her. Das Ventilgehäuse 16 des Sitzventils 14 ist mittels eines an der Schnittstelle 2 angeordnetem Zwischenkörper 24 mit dem Ventilantrieb 1 verbunden. Durch die starre Verbindung des Antriebselements 12 mit dem Schließelement 20 mittels der Ventilstange 22 wird die Bewegung des Antriebselements 12 auf das Schließelement 20 übertragen. Dadurch wird der Ventilsitz 18 geöffnet beziehungsweise geschlossen und ein Durchfluss durch das Ventilgehäuse 16 gesteuert.

Die Aufnahmeeirichtung 4 und die Schnittstelle 2 des Ventilantriebs 1 können insbesondere als Gewinde ausgebildet sein. Dementsprechend umfasst die Ventilstange 22 und der Zwischenkörper 24 antriebsseitig ebenfalls ein Gewinde.

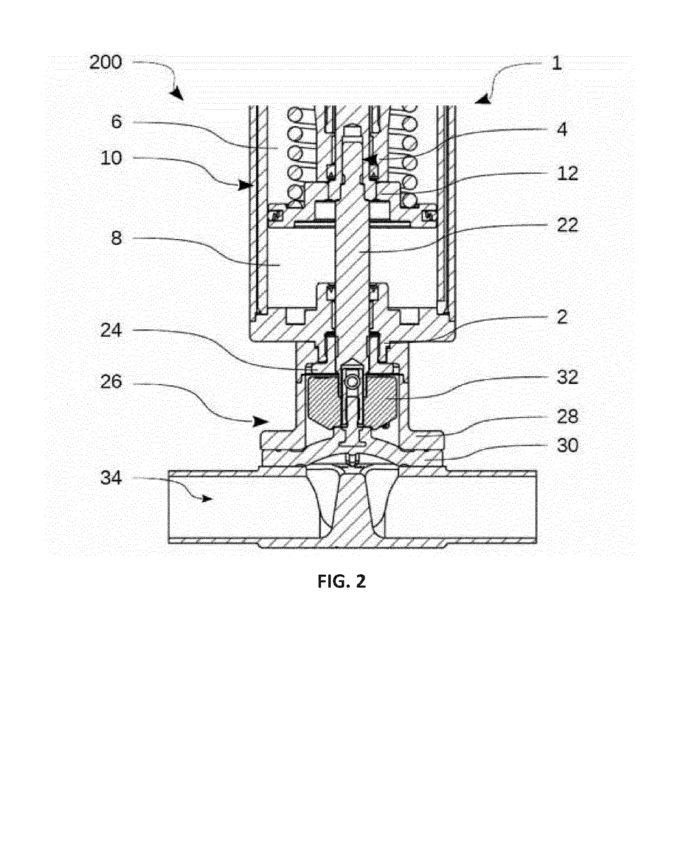

Die Figur 2 zeigt eine weitere Ventilanordnung 200 in einer Schnittdarstellung. Die Ventilanordnung 200 umfasst den Ventilantrieb 1 der Figur 1. Im Unterschied zur Figur 1 umfasst die Ventilanordnung 200 ein Membranventil 26, welches einen Ventilkörper, ein Zwischenstück 28, eine Membran 30 und ein Druckstück 32 umfasst. Das Membranventil 26 ist mittels des Zwischenkörpers 24 mit der Schnittstelle 2 des Ventilantriebs 1 verbunden. Die Ventilstange 22 bildet eine starre Verbindung zwischen dem Antriebselement 12 und der Membran 30. Durch das Antreiben des Ventilantriebs 1 wird das Antriebselement 12 und die durch die Ventilstange 22 mit dem Antriebselement 12 gekoppelte Membran 30 bewegt. Dadurch ist ein Durchfluss durch eine Leitung 34 mittels des Ventilantriebs 1 steuerbar.

Die Ventilstangen der Figuren 1 und 2 sind antriebsseitig identisch ausgebildet, um an der Aufnahmeeinrichtung 4 des Antriebselements 12 angeordnet werden zu können. Die Ventilstangen 22 unterscheiden sich lediglich im einem ventilseitigen Abschnitt. Dieser ventilseitige Abschnitt ist dazu ausgebildet, um an ein entsprechendes Ventil an einem zu bewegenden abdichtenden Element des Ventils angeordnet zu werden. Beispielsweise, wie in den Figuren 1 und 2 dargestellt, um an dem Schließelement 20 beziehungsweise an der Membran 30 befestigt werden zu können.

Die Zwischenkörper 24 der Figuren 1 und 2 sind zumindest antriebsseitig identisch ausgebildet, damit der Zwischenkörper 24 an der Schnittstelle 2 des Ventilantriebs 1 angeordnet werden kann, und unterscheiden sich in einem ventilseitigen Abschnitt. Dieser ventilseitige Abschnitt ist dazu ausgebildet, um entsprechende Ventile beziehungsweise Ventilkörper, wie beispielsweise den Ventilkörper 16 und den Zwischenkörper 28, aufzunehmen und somit mit der Schnittstelle 2 des Ventilantriebs 1 zu verbinden.

Durch die Verwendung antriebsseitig identisch ausgebildeter Ventilstangen 22 und Zwischenkörper 24 können eine Vielzahl an Ventileinrichtungen, wie beispielsweise die Ventilanordnung 100 und 200 modular mit einem identisch oder ähnlich ausgebildeten Antrieb, dem Ventilantrieb 1, aufgebaut werden. Es bedarf der Ventilstange 22 und dem Zwischenkörpers 24, die jeweils ventilseitig an das Ventil angepasst sind. Dadurch können Ventileinheiten mit Ventilen unterschiedlicher Typen, Funktionsweisen und Größen mit einem einheitlichen Antrieb, dem Ventilantrieb 1, angetrieben werden. Somit enthält die Vielzahl an modular aufgebauten Ventileinrichtungen eine große Anzahl an Gleichteilen in Form des einheitlichen Ventilantriebs 1. Dementsprechend entstehen Kosten - und Produktionsvorteile, da der Ventilantrieb 1 in höheren Stückzahlen produziert werden kann.

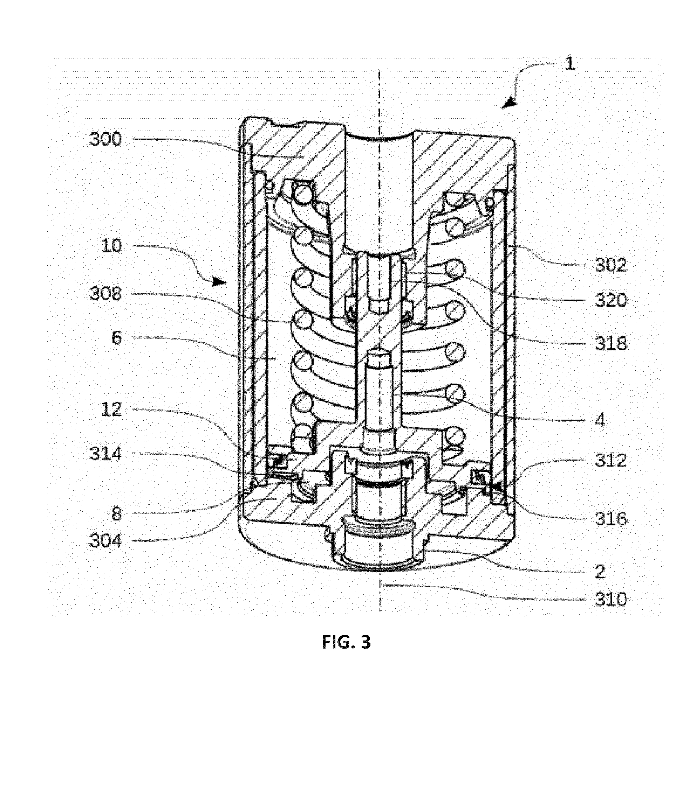

Die Figur 3 zeigt den Ventilantrieb 1 in dem Montagezustand als Schnittdarstellung. Der Ventilantrieb 1 umfasst das Antriebgehäuse 10, welches ein distales Abschlusselement 300, eine Wandung 302 und ein ventilkörperseitiges Abschlusselement 304 umfasst. Zudem umfasst der Ventilantrieb 1 das beweglich entlang einer Stellachse 310 gelagerte Antriebselement 12, der zwischen den Abschlusselementen 300 und 304 angeordnet ist und eine Druckfeder 308, die zwischen dem Antriebselement 12 und dem distalen Abschlusselement 300 angeordnet ist. Die Abschlusselemente 300 und 304, die Wandung 302 und das Antriebselement 12 sind insbesondere rotationssymmetrisch ausgebildet. Die Symmetrieachsen dieser Elemente sind entlang der Stellachse 310 angeordnet. Das Antriebselement 12 ist in einem Betriebszustand, in dem der Ventilantrieb 1 mit Druckluft betrieben wird, entlang der Stellachse 310 rotatorisch und translatorisch relativ zu den feststehenden Abschlusselementen 300 und 304 sowie zu der Wandung 302, also zu dem Antriebsgehäuse 10, beweglich. In dem Betriebszustand kann das Antriebselement 12 eine Mehrzahl von Betriebspositionen einnehmen.

Die Druckfeder 308 hält das Antriebselement 12 durch eine Federkraft in einer möglichen ausgefahrenen Position, falls der Ventilantrieb 1 nicht entsprechend angesteuert wird. Es ist auch vorstellbar, dass die Druckfeder 308 zwischen Antriebselement 12 und dem ventilkörperseitigen Abschlusselement 304 angeordnet ist und das Antriebselement 12 in einer möglichen eingefahrenen Position hält, falls der Ventilantrieb 1 nicht entsprechend angesteuert wird.

In der in der Figur 3 gezeigten Position des Ventilantriebs 1 blockiert eine Fixierungseinrichtung 312 den rotatorischen Freiheitsgrad des Antriebselements 12 um die Stellachse 310. Diese ausgefahrene Position wird als Montageposition bezeichnet. Die Fixierungseinrichtung 312 umfasst auf einer dem ventilkörperseitigen Abschlusselement 304 zugewandten Seite des Antriebselements 12 angeordnete erste Konturen 314, vorliegend als Rastvertiefungen ausgebildet. Auf einer dem Antriebselement 12 zugewandten Seite des ventilkörperseitigen Abschlusselements 304 sind zum Antriebsgehäuse 10 feststehende zweite Konturen 316, insbesondere Rastnasen, angeordnet, die in der Montageposition formschlüssig im Eingriff zu den ersten Konturen 314 erstehen. Es sind jedoch auch weitere formschlüssige Verbindungen denkbar, die die Fixierungseinrichtung 312 sowie ihre Funktion abbilden, beispielsweise Nut und Feder, radial verlaufende ineinandergreifende Konturen oder Verzahnungen. Darüber hinaus ist es zudem denkbar, die Fixierungseinrichtung 312 zwischen Antriebselement 12 und dem distalen Abschlusselement 300 anzuordnen.

Vorteilhafterweise ist die Druckfeder 308 dazu ausgebildet, das Antriebselement 12 in einer Position zu halten, in der die ventilkörperseitige Seite des Kolbens auf Oberflächen gleiten kann, die zwischen den zweiten zum Antriebgehäuse 10 feststehenden Konturen 316 angeordnet sind. Bei dieser auftretenden Rotation des Antriebselements 12 um die Stellachse 310, beispielsweise bei einer Montage oder Demontage einer Ventilstange 22, wird das Antriebselement 12 in die Montageposition bewegt. Dies bewirkt, dass die ersten Konturen 314 formschlüssig mit den zweiten zum Antriebgehäuse 10 feststehenden Konturen 316 in Eingriff stehen und die Rotation des Antriebselements 12 um die Stellachse 310 in beide Drehrichtungen blockieren. Die ersten Konturen 314 und die zweiten Konturen 316 bilden die Fixierungseinrichtung 312. Die Druckfeder 308 ist des Weiteren auch dazu ausgebildet, das Antriebselement 12 in der erreichten Montageposition zu halten. Zudem entsteht bei dem Eingriff der Fixierungseinrichtung 312 ein haptisch merkbares Feedback an den Benutzer.

In einem nicht gezeigten Beispiel sind die ineinandergreifenden Konturen 314, 316 derart ausgeführt, dass ein Lösen des Antriebselements über die Verrastung nicht mehr möglich ist, beispielsweise sind für die Verrastung die Konturen 314, 316 einseitig angefast.

Durch den mittels der Fixierungseinrichtung 312 in der Montageposition blockierten rotatorischen Freiheitsgrad des Antriebselements 12 um die Stellachse 310 ist ein Gegenhalten des Antriebselements 12 gegen ein Anzugsbeziehungsweise Montagemoment der Ventilstange 22 bei der Montage beziehungsweise Demontage, beispielsweise der Ventilstange 22 für Sitzventile oder Membranventile 14 und 26 nicht mehr notwendig. Zudem kann die Ventilstange 22 des anzutreibenden Ventils mit dem Ventilantrieb 1 in der Montageposition einfach und schnell verbunden werden ohne den Bedarf an zusätzlichem Werkzeug.

Darüber hinaus umfasst das Antriebselement 12 eine weitere Aufnahme 318, die in einem dem distalen Abschlusselement 300 zugewandten Bereich des Antriebselements 12 angeordnet ist. Die Aufnahme 318 ist dazu ausgebildet, beispielsweise ein Element eines Signalgebers aufzunehmen, der als Stellungsanzeige der aktuellen Position des Antriebselements 12 dient. Die Aufnahme 318 ist beispielsweise durch ein Gewinde repräsentiert. Selbstverständlich sind auch weitere Verbindungstechniken wie beispielsweise Klippverbindungen, Bajonett-Verschlüsse, Klebeverbindungen oder stoffschlüssige Verbindungen vorstellbar.

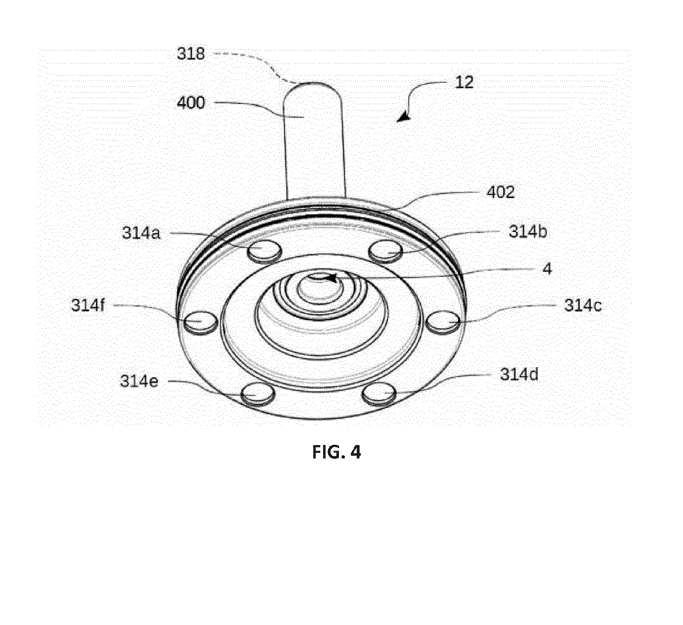

Die Figur 4 zeigt das Antriebselement 12 des Ventilantriebs 1 in einer perspektivischen Darstellung. Das Antriebselement 12 umfasst zu der Aufnahmeeinrichtung 4 und der Aufnahmemöglichkeit 318 einen in einem Dichtabschnitt 320 des distalen Abschlusselements gelagerten Führungsabschnitt 400. Der Dichtabschnitt 320 ermöglicht in Kombination mit dem Führungsabschnitt 400 eine radial geführte Bewegung des Antriebselements 12 rotatorisch um und translatorisch entlang der Stellachse 310. Zudem umfasst das Antriebselement 12 die erste Kontur 314 in Form von Rastvertiefungen 314 a - f oder einer alternativen nicht dargestellten Kontur, die einen Teil der Fixierungseinrichtung 312 des Ventilantriebs 1 abbildet.

Darüber hinaus ist es in nicht dargestellter Form denkbar, die Fixierungseinrichtung 312 durch ein Ineinandergreifen zweier Konturen außerhalb der Kammern 6 und 8 zu realisieren, beispielsweise durch eine erste an dem Führungsabschnitt 400 des Antriebselements 12 angeordnete Kontur und eine zweite an dem distalen Abschlusselement 302 angeordnete Kontur im Bereich des Dichtabschnitts 320 oder außerhalb des Dichtabschnitts 320.

Zudem umfasst das Antriebselement 12 einen am Umfang angeordneten Dichtabschnitt 402, der in Kontakt mit dem Wandungsverlauf 302 steht und dadurch die Kammern 6 und 8 trennt. Darüber hinaus dient der Dichtabschnitt 402 in Verbindung mit dem Wandungsverlauf 302 auch der Lagerung des Antriebselements 12.

Aufgrund des in dem Dichtabschnitt 320 gelagerten Führungsabschnitts 400 entsteht ein deutlich stabilerer Aufbau des Ventilantriebs 1 und eine Funktion ist auch bei höheren Belastungen gewährleistet. Es sind jedoch weitere Konzepte denkbar, die die Lagerung des Antriebselements 12 verbessern, beispielsweise die Verwendung eines entlang der Stellachse 310 größer ausgedehnten Antriebselements 12 mit einem breiteren Dichtabschnitt 402, der ein Verkanten des Antriebselements 12 einschränkt.

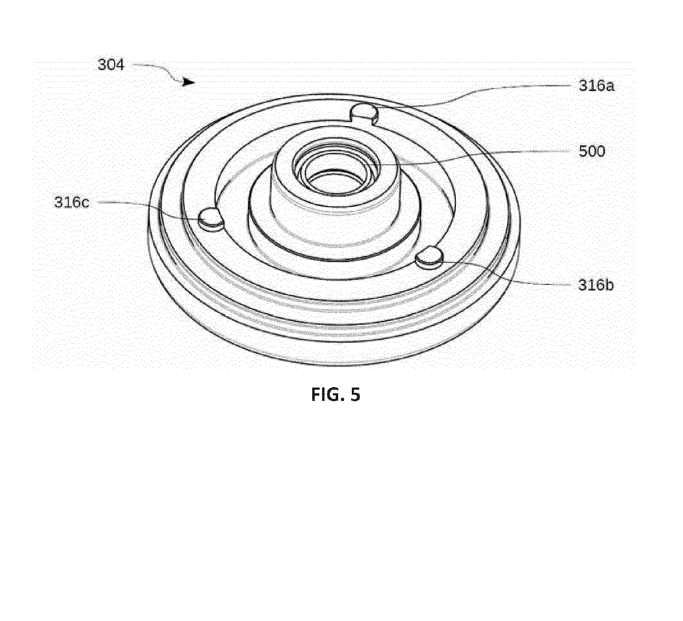

Die Figur 5 zeigt das ventilkörperseitige Abschlusselement 304 des Ventilantriebs 1 in einer perspektivischen Darstellung. Das ventilkörperseitige Abschlusselement 304 umfasst die zweite zum Antriebgehäuse 10 feststehende Kontur 316 in Form von Rastnasen 316 a - c, oder alternativen Konturen, die einen Teil der Fixierungseinrichtung 312 des Ventilantriebs 1 abbilden. In einer vorteilhaften Ausführung weist das ventilkörperseitige Abschlusselement 304 eine ungerade Anzahl an Rastnasen 316 a - c auf. Dadurch wird ein Montage- beziehungsweise Demontagemoment in der Montageposition besser eingeleitet. Selbstverständlich kann auch eine gerade Anzahl an Rastnasen vorgesehen werden.

Ein Beispiel zeichnet sich dadurch aus, dass die Anzahl der Rastnasen 316 a - c des ventilkörperseitigen Abschlusselements 304 und die Anzahl an Rastlaschen 314 a - f des Kolbens 306, beziehungsweise der alternativ möglichen Konturen, wie beispielsweise Nut und Feder, radial verlaufende ineinandergreifende Konturen oder Verzahnungen, unterschiedlich ist. Die Anzahl und Positionierung der in Eingriff stehenden Konturen ist so ausgelegt, dass die Fixierungseinrichtung 312 das Erreichen der Montageposition des Ventilantriebs 1 ermöglicht. Das ventilkörperseitige Abschlusselement 304 umfasst darüber hinaus eine Durchgangsöffnung 500 für die Ventilstange 22, beispielsweise für das Koppelement für Sitzventile oder Membranventile 14 und 26. Diese Durchgangsöffnung 500 dient zudem der Lagerung des Koppelements 22. Dadurch ist die Ventilstange 22 zusätzlich zu der Aufnahmeeinrichtung 4 zusätzlich gelagert. Dadurch entsteht ein stabilerer Aufbau der Ventilanordnung 100 und 200, der eine erhöhte Lebensdauer aufweist und höheren Belastungen widersteht.

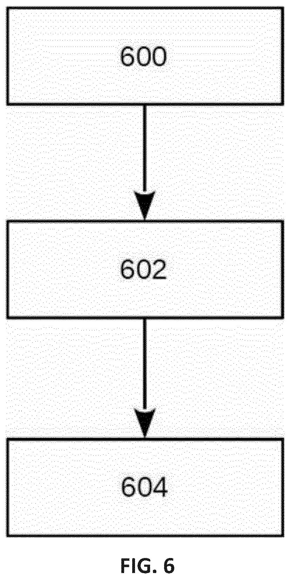

Die Figur 6 zeigt schematisch ein Verfahren für eine Montage des Ventilantriebs 1 an einem Ventil 14 oder 26 um die Ventilanordnung 100 und 200 zu erhalten. Die Ventilstange 22 des Ventils 14 und 26 wird in einem ersten Schritt 600 mittels der Aufnahmeeinrichtung 4 an das Antriebselement 12 des Ventilantriebs 1 angeordnet. In einem zweiten Schritt 602 wird der Zwischenkörper 24 an der Schnittstelle 2 des ventilseitigen Abschlusselements 304 angebracht. In einem dritten Schritt wird der Ventilkörper 16 oder der Zwischenkörper 28 des Ventils 14 oder 26 an dem Zwischenkörper 24 angeordnet. Selbstverständlich sind die Verfahrensschritte 600, 602 und 604 auch für die Montage für eine Vielzahl an Ventilanordnungen mit unterschiedlichen Ventiltypen und Ventilgrößen anwendbar.

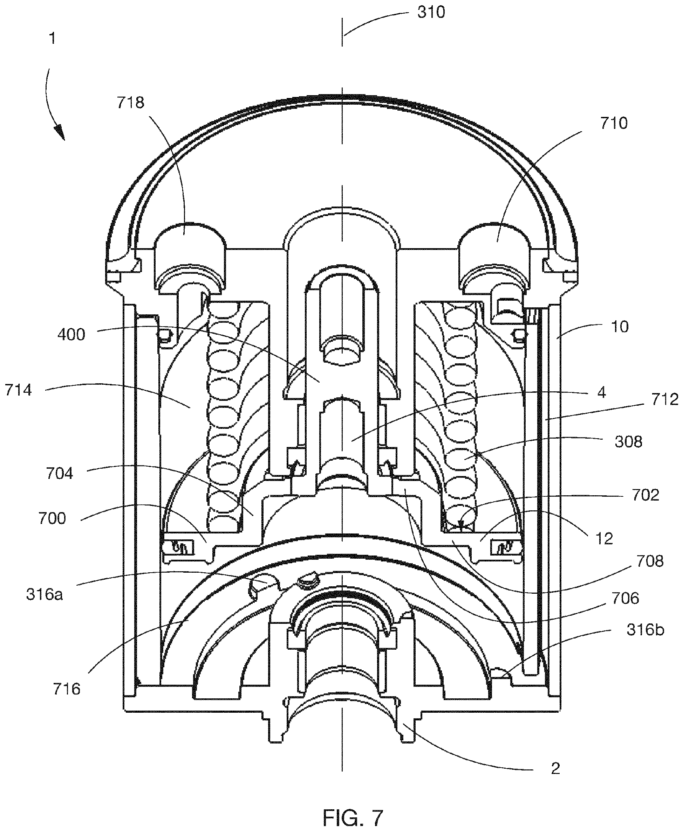

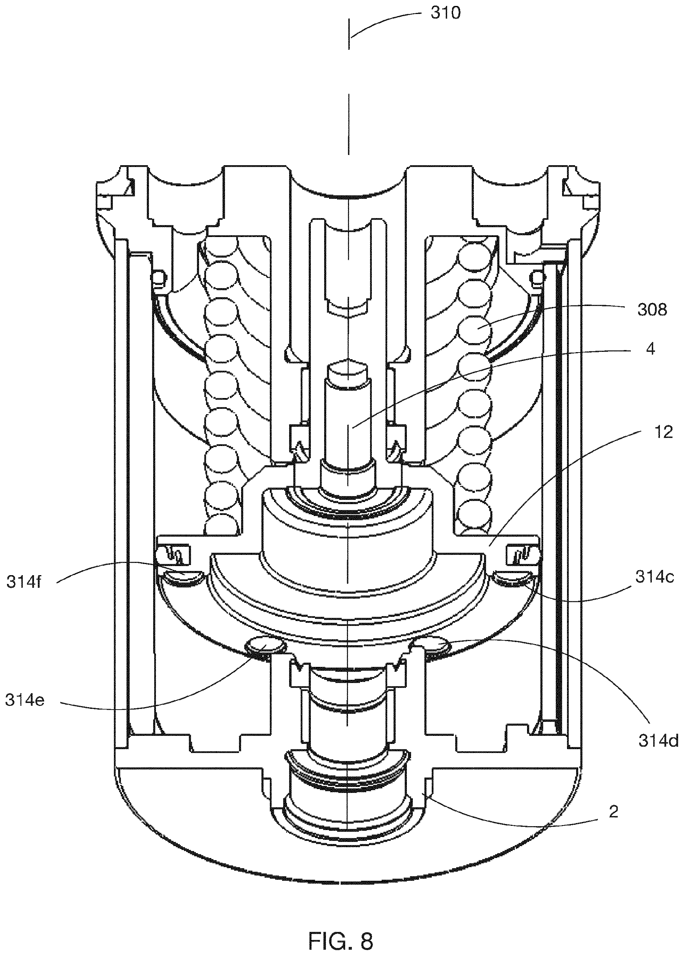

Figuren 7 und 8 zeigen ein Beispiel des Antriebs 1 aus den Figuren 1 bis 3, wobei das Antriebselement 12 sich in der Betriebsposition befindet. Das Antriebselement 12 umfasst den Führungsabschnitt 400 und einen mit dem Führungsabschnitt 400 materialschlüssig verbundenen Kolbenabschnitt 700. Beispielsweise sind der Führungsabschnitt 400 und der Kolbenabschnitt 700 miteinander verschweißt. Eine Ruheposition des Antriebselements 12 ist dadurch gekennzeichnet, dass die Druckfeder 308 eine maximale Längsausdehnung im montierten Zustand des Antriebs 1 aufweist. Die Ruheposition des Antriebselement 12 ist im gezeigten Beispiel in Richtung des nicht gezeigten Ventilkörpers bzw. in Richtung der Schnittstelle 2 orientiert. Die Druckfeder 308 drückt das Antriebselement 12 also in Richtung der Schnittstelle 2.

Der Führungsabschnitt 400 ist zum Antriebsgehäuse 10 entlang der Stellachse 310 beweglich gelagert. Der Kolbenabschnitt 700 schließt sich radial nach außen an den Führungsabschnitt 400 an und stellt die Dichtung in Richtung der Zylinderinnenfläche bereit.

Ein Gegenlagerabschnitt 702 stellt eine Anlagefläche für die Druckfeder 308 bereit, welche sich am Gehäuse 10 abstützt. Ein zylindrischer Abschnitt 704 des Kolbenabschnitts 700 erstreckt sich parallel zur Stellachse 310 und stellt eine radial äußere Oberfläche bereit, um die Druckfeder 308 aufzunehmen.

Ein erster Kragen 706 des Kolbenabschnitts 700 ragt vom dem zylindrischen Abschnitt 704 in Richtung des Führungsabschnitts 400 ab und ist mit diesem materialschlüssig verbunden. Ein zweiter Kragen 708 des Kolbenabschnitts 700 ragt von dem zylindrischen Abschnitt 704 nach außen ab.

Eine erste Stellfluidschnittstelle 710 ist fluidführend über einen lateralen Kanal 712 des Antriebsgehäuses 10 mit einer ersten Kammer 716 verbunden. Der Kanal 712 führt an einer zweiten Kammer 714 vorbei, in welcher die Druckfeder 308 angeordnet ist. Die Kammern 714 und 716 sind durch das Antriebselement 12 druckdicht voneinander getrennt.

Eine zweite Stellfluidschnittstelle 718 ist fluidführend mit der zweiten Kammer 714 verbunden.

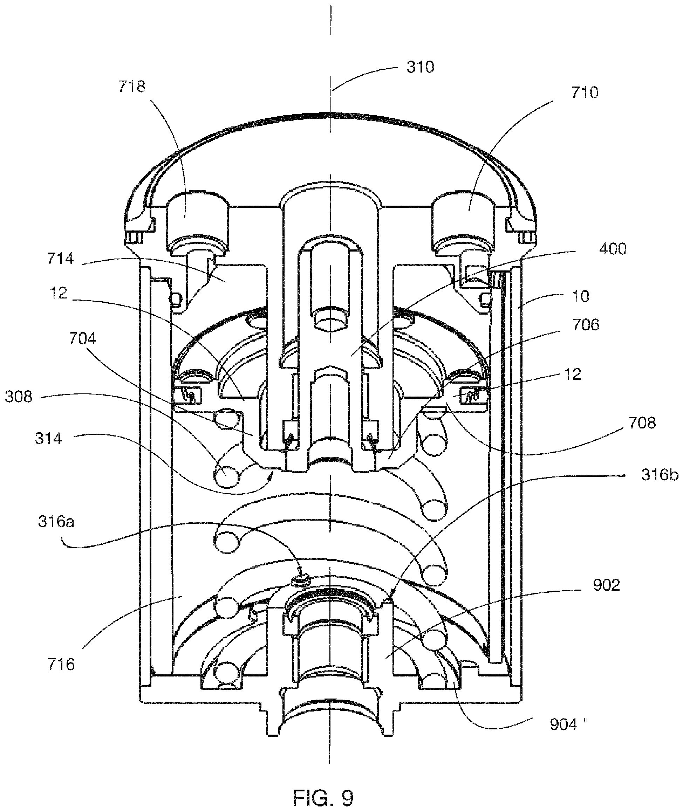

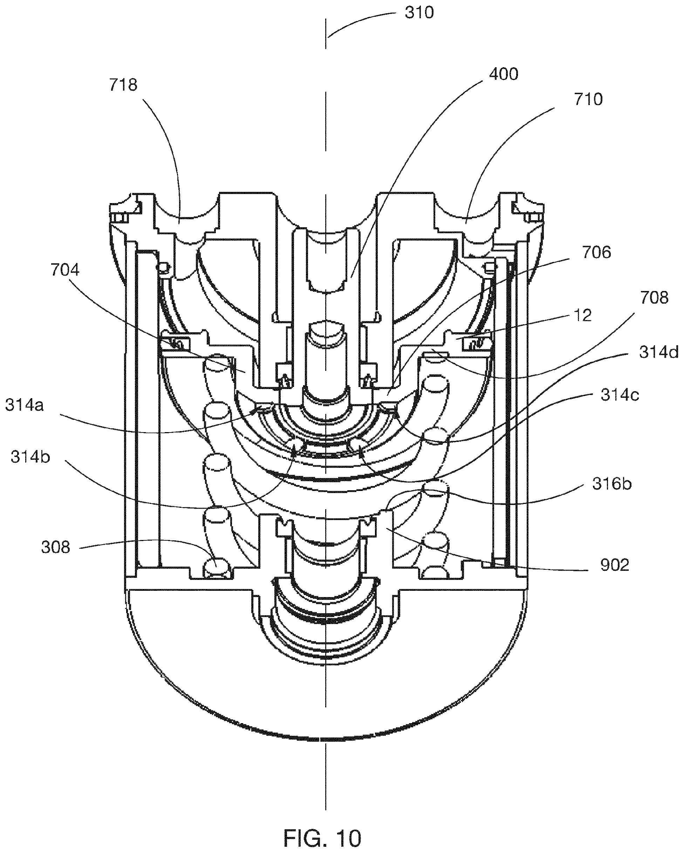

Figuren 9 und 10 zeigen ein weiteres Beispiel des Antriebs 1. Abweichend von dem Beispiel der Figuren 7 und 8 befindet sich die Ruheposition des Antriebselement 12 vom nicht gezeigten Ventilkörper bzw. von der Schnittstelle 2 weg gewandt. Die Druckfeder 308 drückt das Antriebselement 12 also von der Schnittstelle 2 weg.

Im Gegensatz zu dem Beispiel aus den Figuren 7 und 8 ist der Kolbenabschnitt 700 in einer zu einer Lotrechten der Stellachse 310 gespiegelten Position mit dem Führungsabschnitt 400 starr, insbesondere materialschlüssig verbunden. Der Führungsabschnitt 400 und der Kolbenabschnitt 700 sind gleich ausgebildet wie im Beispiel der Figuren 7 und 8. Allerdings sind die wirksamen Konturen zum Blockieren der Rotation des Antriebselements 12 an anderer Stelle angeordnet.

Zur besseren Übersicht sind die Figuren 9 und 10 in einer Zwischenstellung des Antriebselements 12 entlang der Stellachse 310 gezeigt. In dem Montagezustand des Ventilantriebs 1 greift die wenigstens eine am Kragen 706 des Kolbenabschnitts 700 angeordnete erste Kontur 314 des Antriebselements 12 in die wenigstens eine zweite zum Antriebsgehäuse 10 feststehende Kontur 316 derart ein, dass eine Rotation des Antriebselements 12 um die Stellachse 310 in zumindest eine Drehrichtung blockiert ist. Die feststehenden Konturen 316a, 316b sind am distalen Ende eines sich zylindrisch vom Boden des Innenraums in Richtung des Antriebselements 12 erstreckenden Abschnitts 902 angeordnet.

Eine Ringnut 904 im ventilkörperseitigen Abschlusselement 304 dient als zum Antriebsgehäuse 10 feststehendes Gegenlager für die Druckfeder 308.

Durch die radial voneinander unterschiedlichen Positionen der jeweiligen wirksamen Konturen 314 und 316 wird ein Baukastensystem geschaffen, welches die Teilekomplexität reduziert. Zur Realisierung der einen oder anderen Steuerfunktion wird das Antriebselement 12 anders zusammengesetzt. Bei einer Realisierung eines normalgeschlossenen Ventils gemäß den Figuren 7 und 8 sind die wirksamen Konturen 314, 316 radial außerhalb der Druckfeder 308 bzw. einer gedachten zylindrischen Verlängerung der Druckfeder 308 angeordnet. Bei einer Realisierung eines normal-geöffneten Ventils gemäß den Figuren 9 und 10 sind die wirksamen Konturen 316, 314 radial innerhalb der Druckfeder 308 angeordnet.

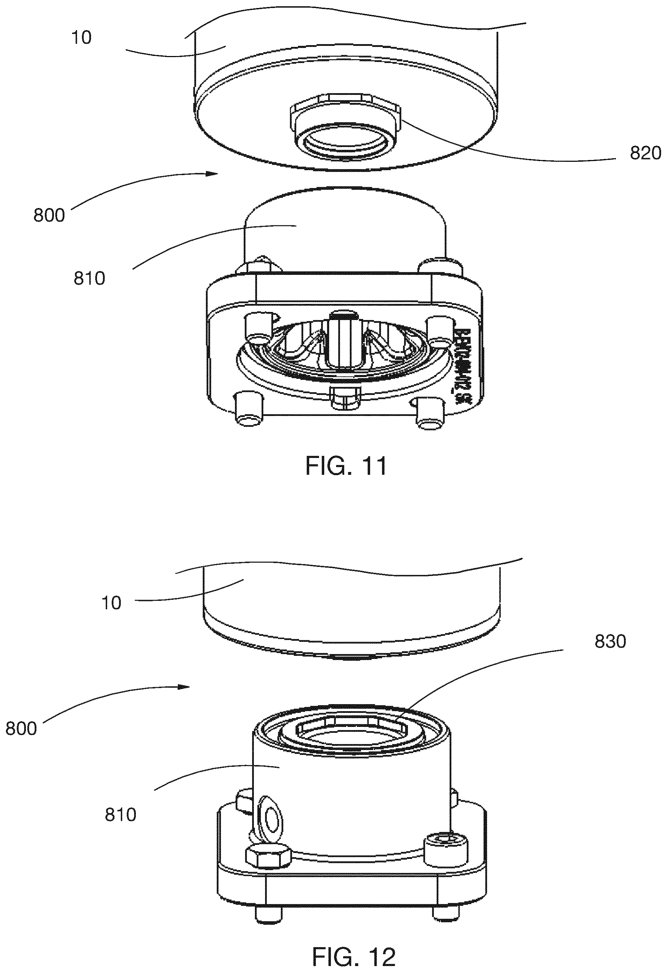

Die Figuren 11 und 12 zeigen in perspektivischer Darstellung ein Beispiel für eine Schnittstelle 800 zwischen dem Antriebsgehäuse 10 und einem Zwischenkörper 810. Der Zwischenkörper 810 ist zwischen dem Antriebsgehäuse 10 und dem Ventilkörper 16 angeordnet. Die Schnittstelle 800 umfasst einen antriebskörperseitigen kodierten Abschnitt 820 sowie einen Zwischenkörper-seitigen kodierten Gegenabschnitt 830. Der Abschnitt 820 und der Gegenabschnitt 830 lassen sich in mehreren Drehstellungen zueinander festlegen, indem die Abschnitte 820 und 830 formschlüssig ineinandergreifen, womit sich beispielsweise Vorteile für die Anordnung von seitlich von dem Antriebsgehäuse 10 abrangen Anschlüssen ergeben. Es ergeben sich somit Freiheitsgrade bei der Montage.

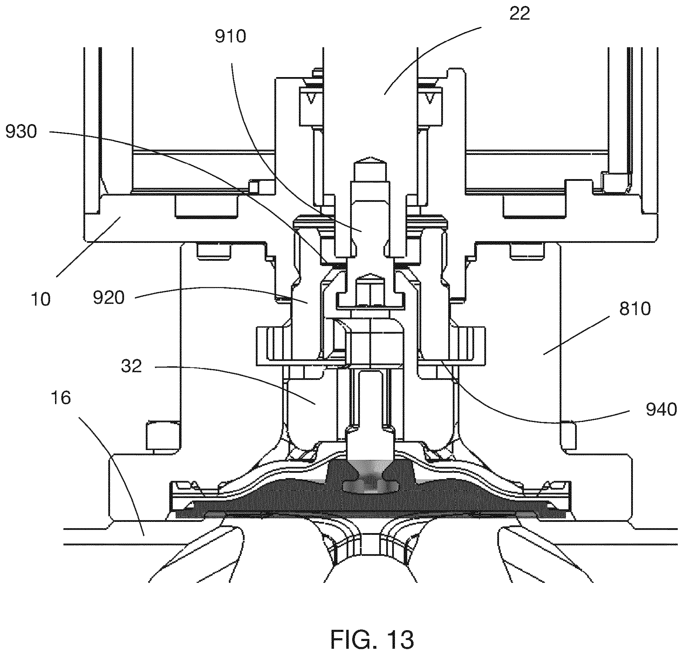

Figur 13 zeigt einem schematischen Längsschnitt des Antriebsgehäuses 10, des Zwischenkörpers 810 und des Ventilkörpers 16. In die Ventilstange 22 ist ein Adapter 910 eingebracht. Ventil körperseitig umfasst der Adapter 910 einen Anschluss, in welche das Druckstück 32 insbesondere seitlich eingehängt ist. Eine Hubbegrenzung 920 erstreckt sich ausgehend von dem Innenraum des Zwischenkörpers 810 bis in eine Ausnehmung des Antriebsgehäuses 10. Ein in Richtung Antriebskörper 10 orientierter Anschlagbereich 930 der Hubbegrenzung 920 begrenzt eine Bewegung der Ventilstange 22 in Richtung des Ventilkörpers 16. Ein in Richtung des Ventilkörpers 16 orientierter Anschlagbereich 940 begrenzt eine Bewegung des Druckstücks 32 in Richtung des Antriebskörpers 10.

## Patentansprüche

1. Ein Ventilantrieb (1) umfassend ein Antriebsgehäuse (10) und ein innerhalb des Antriebsgehäuses (10) beweglich gelagertes Antriebselement (12), insbesondere einen Pneumatik-Kolben, wobei das Antriebselement (12) in einem Betriebszustand des Ventilantriebs (1) translatorisch entlang einer Stellachse (310) und rotatorisch um die Stellachse (310) bewegbar ist, **dadurch gekennzeichnet, dass** in einem von dem Betriebszustand unterschiedlichen Montagezustand des Ventilantriebs (1), in welchem ein anzutreibendes Element, insbesondere eine Ventilstange (22), an das Antriebselement (12) montierbar oder demontierbar ist, wenigstens eine erste Kontur (314) des Antriebselements (12) in wenigstens eine zweite zum Antriebsgehäuse (10) feststehende Kontur (316) derart eingreift, dass durch eine Axialverzahnung eine Rotation des Antriebselements (12) um die Stellachse (310) in zumindest eine Drehrichtung blockiert ist.

2. Der Ventilantrieb (1) gemäß Anspruch 1, wobei eine sich an dem Antriebsgehäuse (10) abstützende Druckfeder (308) das Antriebselement (12) in Richtung der zum Antriebsgehäuse (10) feststehenden Kontur (316) drückt.

3. Der Ventilantrieb (1) gemäß einem der vorigen Ansprüche, wobei in dem Montagezustand eine Ventilstange (22) und das Antriebselement (12) über ineinandergreifende Gewinde (4) miteinander verbindbar sind.

4. Der Ventilantrieb (1) gemäß einem der vorigen Ansprüche, wobei ein Zwischenkörper (24) mit einer an dem Ventilgehäuse (10) angeordneten Schnittstelle (2) über ineinandergreifende Gewinde miteinander verbindbar sind.

5. Der Ventilantrieb (1) gemäß einem der vorigen Ansprüche, wobei die wenigstens eine zweite zum Antriebsgehäuse (10) feststehende Kontur (316) an einem insbesondere lotrecht zur Stellachse (310) verlaufenden zweiten Abschnitt innerhalb des Antriebsgehäuses (10) angeordnet ist, und wobei die wenigstens eine erste Kontur (314) an einem insbesondere lotrecht zur Stellachse (310) verlaufenden ersten Abschnitt des Antriebselements (12), welcher dem zweiten Abschnitt des Antriebsgehäuses (10) zugewandt ist, angeordnet ist.

6. Der Ventilantrieb (1) gemäß dem vorigen Anspruch, wobei der erste Abschnitt des Antriebselements (12) oder der zweite Abschnitt des Antriebsgehäuses (10) lotrecht zur Stellachse (310) verlaufende Oberflächen umfasst, welche zwischen zwei benachbarten der ersten Konturen (314) oder zwei benachbarten der zweiten Konturen (316) verlaufen, und wobei die zweite Kontur (316) oder die erste Kontur (314) eine jeweilige distale Oberfläche umfasst, die lotrecht zur Stellachse (310) verläuft.

7. Der Ventilantrieb (1) gemäß einem der vorigen Ansprüche, wobei eine der Konturen (314, 316), die erste Kontur (314) des Antriebelements oder die zweite zum Antriebgehäuse (10) feststehende Kontur (316), als Rastvertiefung (314 a-f) ausgebildet ist und die andere der Konturen (314, 316) als Rastnase (316 a-c) ausgebildet ist.

8. Der Ventilantrieb (1) gemäß einem der vorigen Ansprüche, wobei in dem Montagezustand mindestens eine Kontur (314, 316), vorzugsweise mehrere Konturen (314, 316), im Eingriff stehen.

9. Der Ventilantrieb (1) gemäß einem der vorigen Ansprüche, wobei das Antriebselement (12) einen Führungsabschnitt (400) und einen starr mit dem Führungsabschnitt (400) verbundenen Kolbenabschnitt (700) umfasst.

10. Der Ventilantrieb (1) gemäß den Ansprüchen 2 und 9, wobei die mit der wenigstens einen feststehenden zweiten Kontur (316) zusammenwirkende wenigstens eine erste Kontur (314) sich radial außerhalb einer gedachten Verlängerung der Druckfeder (308) befindet.

11. Der Ventilantrieb (1) gemäß dem Anspruch 9, wobei die mit der wenigstens einen feststehenden zweiten Kontur (316) zusammenwirkende wenigstens eine erste Kontur (314) sich radial innerhalb einer gedachten Verlängerung der Druckfeder (308) befindet.

12. Eine Ventilanordnung (100, 200) umfassend den Ventilantrieb (1) gemäß einem der vorigen Ansprüche und ein Ventil (14, 26), wobei der Ventilantrieb (1) mit dem Ventil (14, 26) verbunden ist.

13. Ein Verfahren zur Montage des Ventilantriebs (1) gemäß einem der Ansprüche 1 bis 11 an einem Ventil (14, 26) umfassend:
Anordnen (600) einer Ventilstange (22) des Ventils (14, 26) an das Antriebselement (12) des Ventilantriebs (1) in dem Montagezustand, wobei die wenigstens eine erste Kontur (314) des Antriebselements (12) in die wenigstens eine zweite Kontur (316) derart eingreift, dass durch eine Axialverzahnung eine Rotation des Antriebselements (12) um die Stellachse (310) in zumindest eine Drehrichtung blockiert ist;
Anbringen (602) eines Zwischenkörpers (24) des Ventils (14, 16) an das Antriebgehäuse (10) des Ventilantriebs (1); und
Anordnen (604) eines Ventilkörpers (16, 28) des Ventils (14, 26) an den Zwischenkörper (24).

## Claims

1. A valve actuator (1) comprising an actuator housing (10) and an actuator element (12), in particular a pneumatic piston, movably mounted within the actuator housing (10), wherein the actuator element (12) is movable translationally along an actuating axis (310) and rotationally about the actuating axis (310) in an operating state of the valve actuator (1), **characterized in that** in an assembly state of the valve actuator (1) which is different from the operating state and in which an element to be actuated, in particular a valve rod (22), can be mounted on or removed from the actuator element (12), at least one first contour (314) of the actuator element (12) engages in at least one second contour (316) which is fixed relative to the actuator housing (10) in such a way that rotation of the actuator element (12) about the actuating axis (310) in at least one direction of rotation is blocked by axial toothing.

2. The valve actuator (1) according to claim 1, wherein a compression spring (308) that braces against the actuator housing (10) presses the actuator element (12) in the direction of the contour (316) which is fixed relative to the actuator housing (10).

3. The valve actuator (1) according to either of the preceding claims, wherein in the assembly state, a valve rod (22) and the actuator element (12) can be connected to one another via mating threads (4).

4. The valve actuator (1) according to any of the preceding claims, wherein an intermediate body (24) can be connected to an interface (2) arranged on the valve housing (10) via mating threads.

5. The valve actuator (1) according to any of the preceding claims, wherein the at least one second contour (316) which is fixed relative to the actuator housing (10) is arranged on a second portion extending in particular perpendicularly to the actuating axis (310) within the actuator housing (10), and wherein the at least one first contour (314) is arranged on a first portion of the actuator element (12) which extends in particular perpendicularly to the actuating axis (310) and faces the second portion of the actuator housing (10).

6. The valve actuator (1) according to the preceding claim, wherein the first portion of the actuator element (12) or the second portion of the actuator housing (10) comprises surfaces which extend perpendicularly to the actuating axis (310) and extend between two adjacent contours of the first contours (314) or two adjacent contours of the second contours (316), and wherein the second contour (316) or the first contour (314) comprises an associated distal surface that is perpendicular to the actuating axis (310).

7. The valve actuator (1) according to any of the preceding claims, wherein one of the contours (314, 316), the first contour (314) of the actuator element or the second contour (316) which is fixed relative to the actuator housing (10) is formed as a latching recess (314 a-f) and the other of the contours (314, 316) is formed as a latching lug (316 a-c).

8. The valve actuator (1) according to any of the preceding claims, wherein, in the assembly state, at least one contour (314, 316), preferably a plurality of contours (314, 316), are in engagement.

9. The valve actuator (1) according to any of the preceding claims, wherein the actuator element (12) comprises a guide portion (400) and a piston portion (700) which is rigidly connected to the guide portion (400).

10. The valve actuator (1) according to claims 2 and 9, wherein the at least one first contour (314), which cooperates with the at least one fixed second contour (316), is located radially outside a notional extension of the compression spring (308).

11. The valve actuator (1) according to claim 9, wherein the at least one first contour (314), which cooperates with the at least one fixed second contour (316), is located radially inside a notional extension of the compression spring (308).

12. A valve assembly (100, 200) comprising the valve actuator (1) according to any of the preceding claims, and a valve (14, 26), wherein the valve actuator (1) is connected to the valve (14, 26).

13. A method for assembling the valve actuator (1) according to any of claims 1 to 11 on a valve (14, 26) comprising:
arranging (600) a valve rod (22) of the valve (14, 26) on the actuator element (12) of the valve actuator (1) in the assembly state, wherein the at least one first contour (314) of the actuator element (12) engages into the at least one second contour (316) in such a way that rotation of the actuator element (12) about the actuating axis (310) in at least one direction of rotation is blocked by axial toothing;
attaching (602) an intermediate body (24) of the valve (14, 16) to the actuator housing (10) of the valve actuator (1); and
arranging (604) a valve body (16, 28) of the valve (14, 26) on the intermediate body (24).

## Revendications

1. Entraînement de vanne (1) comprenant un boîtier d'entraînement (10) et un élément d'entraînement (12), en particulier un piston pneumatique, monté de manière mobile à l'intérieur du boîtier d'entraînement (10), dans lequel, dans un état de fonctionnement de l'entraînement de vanne (1), ledit élément d'entraînement (12) est déplaçable en translation le long d'un axe de réglage (310) et en rotation autour de l'axe de réglage (310), **caractérisé par le fait que**, dans un état de montage de l'entraînement de vanne (1), qui est différent de l'état de fonctionnement et dans lequel un élément à entraîner, en particulier une tige de vanne (22), peut être monté sur l'élément d'entraînement (12) ou démonté de celui-ci, au moins un premier contour (314) de l'élément d'entraînement (12) s'engage dans au moins un deuxième contour (316) fixe par rapport au boîtier d'entraînement (10), de telle sorte que, par une denture axiale, une rotation de l'élément d'entraînement (12) autour de l'axe de réglage (310) est bloquée dans au moins un sens de rotation.

2. Entraînement de vanne (1) selon la revendication 1, dans lequel un ressort de compression (308) prenant appui sur le boîtier d'entraînement (10) pousse l'élément d'entraînement (12) en direction du contour (316) fixe par rapport au boîtier d'entraînement (10).

3. Entraînement de vanne (1) selon l'une quelconque des revendications précédentes, dans lequel, dans l'état de montage, une tige de vanne (22) et l'élément d'entraînement (12) peuvent être reliés l'un à l'autre par des filetages (4) engrenés.

4. Entraînement de vanne (1) selon l'une quelconque des revendications précédentes, dans lequel un corps intermédiaire (24) peut être relié à une interface (2) disposée sur le boîtier de vanne (10), par des filetages engrenés.

5. Entraînement de vanne (1) selon l'une quelconque des revendications précédentes, dans lequel ledit au moins un deuxième contour (316) fixe par rapport au boîtier d'entraînement (10) est disposé sur une deuxième section à l'intérieur du boîtier d'entraînement (10), qui s'étend en particulier perpendiculairement à l'axe de réglage (310), et dans lequel ledit au moins un premier contour (314) est disposé sur une première section de l'élément d'entraînement (12), qui 'étend en particulier perpendiculairement à l'axe de réglage (310) et qui montre vers la deuxième section du boîtier d'entraînement (10).

6. Entraînement de vanne (1) selon la revendication précédente, dans lequel la première section de l'élément d'entraînement (12) ou la deuxième section du boîtier d'entraînement (10) comprend des surfaces qui s'étendent perpendiculairement à l'axe de réglage (310) et qui s'étendent entre deux premiers contours adjacents des premiers contours (314) ou deux deuxièmes contours adjacents des deuxièmes contours (316), et dans lequel le deuxième contour (316) ou le premier contour (314) comprend une surface distale respective qui s'étend perpendiculairement à l'axe de réglage (310).

7. Entraînement de vanne (1) selon l'une quelconque des revendications précédentes, dans lequel l'un des contours (314, 316), le premier contour (314) de l'élément d'entraînement ou le deuxième contour (316) fixe par rapport au boîtier d'entraînement (10), est conçu en tant qu'évidement à enclenchement (314 a-f), et l'autre des contours (314, 316) est conçu en tant que nez à enclenchement (316 a-c).

8. Entraînement de vanne (1) selon l'une quelconque des revendications précédentes, dans lequel, dans l'état de montage, au moins un contour (314, 316), de préférence plusieurs contours (314, 316), sont en prise.

9. Entraînement de vanne (1) selon l'une quelconque des revendications précédentes, dans lequel l'élément d'entraînement (12) comprend une section de guidage (400) et une section de piston (700) reliée rigidement à la section de guidage (400).

10. Entraînement de vanne (1) selon les revendications 2 et 9, dans lequel ledit au moins un premier contour (314) agissant de concert avec ledit au moins un deuxième contour fixe (316) est situé radialement à l'extérieur d'un prolongement imaginaire du ressort de compression (308).

11. Entraînement de vanne (1) selon la revendication 9, dans lequel ledit au moins un premier contour (314) agissant de concert avec ledit au moins un deuxième contour fixe (316) est situé radialement à l'intérieur d'un prolongement imaginaire du ressort de compression (308).

12. Agencement de vanne (100, 200) comprenant l'entraînement de vanne (1) selon l'une quelconque des revendications précédentes et une vanne (14, 26), dans lequel l'entraînement de vanne (1) est relié à la vanne (14, 26).

13. Procédé de montage de l'entraînement de vanne (1) selon l'une quelconque des revendications 1 à 11, sur une vanne (14, 26), comprenant:
la disposition (600) d'une tige de vanne (22) de la vanne (14, 26) sur l'élément d'entraînement (12) de l'entraînement de vanne (1) dans l'état de montage, dans lequel ledit au moins un premier contour (314) de l'élément d'entraînement (12) s'engage dans ledit au moins un deuxième contour (316) de telle sorte que, par une denture axiale, une rotation de l'élément d'entraînement (12) autour de l'axe de réglage (310) est bloquée dans au moins un sens de rotation;
le montage (602) d'un corps intermédiaire (24) de la vanne (14, 16) sur le boîtier d'entraînement (10) de l'entraînement de vanne (1); et
la disposition (604) d'un corps de vanne (16, 28) de la vanne (14, 26) sur le corps intermédiaire (24).
